# EUROPÄISCHE PATENTANMELDUNG

(11) **EP 1 070 863 A2**
(43) Veröffentlichungstag der Anmeldung: **24.01.2001**
(21) Anmeldenummer: 00113892.4
(22) Anmeldetag: 30.06.2000
(51) Int. Cl.: F16C 13/00, B41F 27/00

(54) **Walze bestehend aus einem Metallkern und einer weichen elastomeren Beschichtung sowie Verfahren zum Aufbringen dieser Schicht auf eine Walze**

(30) Priorität: 22.07.1999 DE 19934569
(71) Anmelder: Felix Böttcher GmbH & Co., 50933 Köln (DE)
(72) Erfinder: Cyzycki, Stanislaus, 51381 Leverkusen (DE); Pickelmann, Günter, 41169 Mönchengladbach (DE)
(74) Vertreter: Werner, Hans-Karsten, Dr.Dipl.-Chem.

(57) **Zusammenfassung**

Die Walze bestehend aus einem Metallkern (1) und einer weiteren elastomeren Beschichtung (2) sowie zwei festen Zapfen (3,3') weist zwischen dem Metallkern (1) und der elastomeren Beschichtung (2) eine feste, konische, dauerhaft mit dem Metallkern verbundene Hartelastomerschicht (4) auf und einen festen, konischen, geringfügig dehnbaren Träger (5), der dauerhaft mit der weichen elastomeren Schicht (2) verbunden ist und zwischen der Hartelastomerschicht (4) und dem Träger (5) durch durchströmende Druckluft ein Zwischenraum herstellbar ist, welcher ein seitliches Verschieben des Trägers auf der Hartelastomerschicht (4) gestattet. Während des Durchblasens von Luft entsteht ein Luftpolster, welches es gestattet, die Hülse seitlich auf dem Metallkern zu verschieben und zu positionieren. Nach Beendigung des Durchblasens der Luft zieht sich die Hülse zusammen und kommt fest auf der konischen Hartelastomerschicht (4) zu liegen.

## Beschreibung

Gegenstand der vorliegenden Erfindung ist eine Walze bestehend aus einem Metallkern und einer weichen, elastomeren Beschichtung sowie zwei festen Zapfen sowie Verfahren zum Aufbringen einer weichen elastomeren Schicht auf eine Walze bestehend aus einem Metallkern, zwei festen Zapfen und einer weichen elastomeren Beschichtung.

Walzen bestehend aus einem Metallkern und einer weichen, elastomeren Beschichtung sowie zwei festen Zapfen werden in erheblichem Umfang eingesetzt zum Beschichten von glatten flächigen Materialien wie Blechen, Holz- und Kunststoffplatten. Dieses Beschichten erfolgt im allgemeinen mit nur sehr geringem Anpreßdruck. Es ist dabei notwendig, daß die weiche, elastomere Beschichtung völlig glatt ist und keine Beschädigungen aufweist, da andernfalls nach jedem Umlauf der Walze ein Beschichtungsfehler entsteht. Derartige Beschichtungswalzen werden daher relativ häufig ausgebaut und neu geschliffen, um wieder eine einwandfrei glatte Oberfläche zu erzeugen. Nach mehrfachem Abschleifen der Oberfläche wird die elastomere Beschichtung so dünn, daß sie vollständig entfernt werden muß und durch eine neue Beschichtung ersetzt wird. Typische weiche, elastomere Beschichtungen von derartigen Beschichtungswalzen sind anfangs 20 bis 30 mm dick. Sobald sie durch mehrfaches Abschleifen nur noch eine Dicke von 5 bis 7 mm aufweisen, wird die elastomere Beschichtung völlig entfernt und durch eine neue dickere Beschichtung von 20 bis 30 mm ersetzt. Diese Erneuerung der elastomeren Beschichtung erfordert ein Versenden zum Walzenhersteller und den erneuten Versand der neubeschichteten Walze. Bei diesem Transport muß unbedingt darauf geachtet werden, daß es zu keinen Beschädigungen oder Verletzungen der Walzenoberfläche kommt.

Von Druckzylindern, insbesondere Druckzylindern für den Flexodruck ist bekannt, die druckende elastische Schicht in Form einer nicht dehnbaren Hülle auf einen Walzendorn aufzusetzen, welcher schrumpfbar ausgestaltet ist und nach dem Aufsetzen der druckenden Hülse so vergrößert werden kann, daß Walzenkern und Hülse nicht verschiebbar miteinander verbunden sind. Derartige Druckwalzen bestehend aus einem speziellen Walzenkern und aufsteckbarer Hülse sind beispielsweise beschrieben in der EP 0 527 293, EP 0 732 201 und EP 0 736 382. Derartige Druckzylinder sind somit kompliziert konstruiert und relativ empfindlich.

Die Erfindung hat sich die Aufgabe gestellt, das Verfahren zum Aufbringen einer weichen elastomeren Schicht auf einer Walze zu vereinfachen und insbesondere den Versand der mehrfach gebrauchten und abgeschliffenen Walzen zum Hersteller zu vermeiden. Nach Möglichkeit sollen die bereits vorhandenen, relativ einfach gebauten Walzenkerne weiterverwendet oder wiederverwertet werden können.

Diese Aufgabe wird dadurch gelöst, daß die Walzen zwischen dem Metallkern und der elastomeren Beschichtung, eine feste, konische, dauerhaft mit dem Metallkern verbundene Hartelastomerschicht und einen festen, konischen, geringfügig dehnbaren Träger aufweisen, der dauerhaft mit der weichen elastomeren Schicht verbunden ist und zwischen der Hartelastomerschicht und dem Träger durch durchströmende Druckluft ein Zwischenraum herstellbar ist, welcher ein seitliches Verschieben des Trägers auf der Hartelastomerschicht gestattet.

Vorzugsweise ist der Metallkern hohl und weist an einer Seite eine Einlaßöffnung für Druckluft auf. Der Metallkern weist auf seinem Außenumfang nebst der mit ihm fest verbundenen Hartelastomerschicht mindestens eine Austrittsöffnung für Druckluft auf. Im allgemeinen wird seitlich durch ein Loch im Inneren von einem der beiden Zapfen Druckluft eingeblasen, die an mehrern Austrittsöffnungen wieder austreten kann. Dabei bewirkt diese Druckluft, daß sich die äußere Hülse geringfügig ausdehnt und somit leicht verschoben werden kann. Sobald das Durchblasen der Druckluft beendet ist, zieht sich die Hülse zusammen und kommt somit fest auf der konischen Hartelastomerschicht zu liegen.

Da die erfindungsgemäßen Walzen vor allen Dingen zum Beschichten eingesetzt werden und deshalb nur mit relativ geringem Druck arbeiten, besteht praktisch keine Gefahr, daß die Hülse auf dem Metallkern mit der Hartelastomerschicht verschoben wird. Gegebenenfalls kann aber, die Haftfestigkeit erhöht werden, indem die Hartelastomerschicht an der Oberfläche aufgerauht wird. Gegebenenfalls kann die Hartelastomerschicht auch eine die Rauhigkeit erhöhenden Füllstoff enthalten, so daß die darauf aufliegende Hülse kaum noch verrutschen kann.

Die weiche, elastomere Beschichtung der Hülse kann in bekannter Weise von Zeit zu Zeit abgeschliffen werden, um wieder eine völlig einwandfreie Oberfläche zu erzeugen. Sobald die weiche elastomere Schicht zu dünn geworden ist, kann die Hülse vom Walzenkern abgezogen werden, indem erneut von der Seite her Druckluft eingeblasen wird. Gewünschtenfalls kann die abgeschliffene und gebrauchte Hülse eingeschickt und erneut mit weichem, elastomerem Material beschichtet werden. Auf alle Fälle ist ein Versenden der gesamten Walze mit dem Metallkern nicht mehr erforderlich.

Als fester, konischer, geringfügig dehnbarer Träger für die weiche, elastomere Schicht eignen sich beispielsweise faserverstärkte Kunststoffe. Als Fasern eignen sich insbesondere Glasfasern oder Kohlenstoffasern da auf diesen die weiche, elastomere Beschichtung aufvulkanisiert werden kann.

Durch die konische Ausgestaltung dieses Trägers einerseits und der Hartelastomerschicht andererseits entsteht zwischen dem Metallkern einerseits und der weichen, elastomeren Beschichtung andererseits eine trennbare Zwischenschicht, die insgesamt wieder praktisch zylindrisch ist. Dennoch erleichtert die konische Ausgestaltung die Montage der Hülse auf dem beschichteten Metallkern. Diese Montage wird durch das Luftpolster während des Durchblasens von Druckluft ermöglicht. Nach dem Beenden des Durchblasens der Luft zieht sich die Hülse wieder zusammen und erhält dadurch eine ausreichend feste Verbindung mit dem Walzenkern. Der Walzenkern mit der konischen Hartelastomerschicht verbleibt somit beim Anwender. Ausgetauscht und gegebenenfalls regeneriert wird nur die auf dem Metallkern passende Hülse bestehend aus dem festen konischen geringfügig dehnbaren Träger und der darauf befindlichen weichen elastomeren Schicht.

Für den Anwender und Anlagenbetreiber entfällt die Anschaffung und Lagerhaltung von Reservewalzen. Er benötigt nur noch eine ausreichende Anzahl von Hülsen.

Das Verfahren zum Aufbringen einer weichen elastomeren Schicht auf eine Walze bestehend aus einem Metallkern, zwei festen Zapfen und einer weichen elastomeren Beschichtung erfolgt somit dadurch, daß von einer Seite her in den Metallkern Druckluft eingeblasen wird, welche durch mindestens eine Austrittsöffnung auf dem Außenumfang des Metallkerns wieder austritt, wobei der Metallkern auf dem Außenumfang eine konische Hartelastomerschicht aufweist, die an den gleichen Stellen wie der Metallkern ebenfalls mindestens eine Austrittsöffnung für die Druckluft aufweist und wobei während des Durchblasens der Luft durch den Metallkern und die Austrittsöffnung (en) von der entgegengesetzten Seite her eine auf den Metallkern passende Hülse aufgeschoben wird, welche aus einem festen, konischen, geringfügig dehnbaren Träger und der weichen, elastomeren Schicht besteht, wobei die Hülse nach Beendigung des Durchblasens der Luft sich zusammenzieht und fest auf der konischen Hartelastomerschicht zu liegen kommt.

Erfindungsgemäße Walzen sind im allgemeinen 50 bis 300 cm lang und weisen Durchmesser zwischen 15 und 35 cm auf. Sowohl für den Träger wie für die Hartelastomere Schicht reicht es aus, wenn die Konizität 0,05 bis 0,3 mm pro Meter Länge aufweist. Im allgemeinen genügt eine Konizität von 0,2 mm pro Meter Länge der Walze. Wesentlich geringere Konizität erschwert das Aufziehen, wesentlich höhere Konizität kann dazu führen, daß bei Druckbelastung die Hülse vom Kern abrutscht.

Als Druckluft kann die meist zur Verfügung stehende Druckluft von ca. 6 bar eingesetzt werden. Diese genügt jedenfalls völlig, um das für die Montage notwendige Luftpolster zwischen den beiden konischen Schichten zu erzeugen.

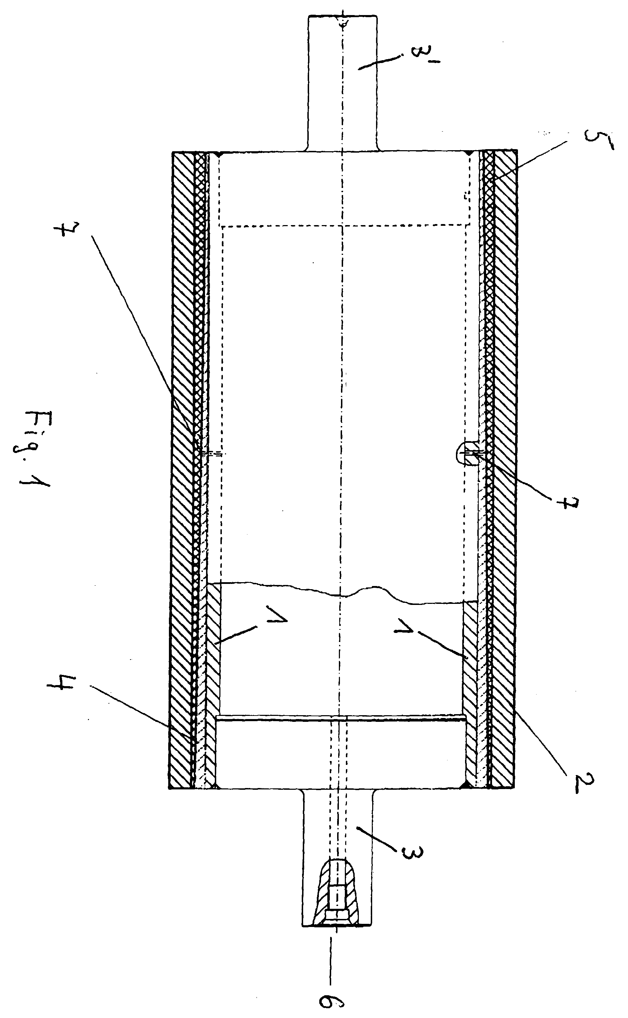

Eine typische Ausführungsform der erfindungsgemäßen Walze ist in der Figur 1 dargestellt. Hierin bedeutet:
- 1: den Metallkern
- 2: die weiche, elastomere Beschichtung
- 3,3': feste Zapfen
- 4: feste, konische, dauerhaft mit dem Metallkern verbundene Hartelastomerschicht
- 5: fester, konischer, geringfügig dehnbarer Träger
- 6: Einlaßöffnung für Druckluft
- 7: Austrittsöffnung für Druckluft

Sobald durch die Einlaßöffnung für Druckluft, die gewünschtenfalls auch seitlich im Abschluß der Walze liegen kann, Druckluft hindurchgeblasen wird, tritt diese durch die Austrittsöffnung (en) 7 aus und erzeugt zwischen der Hartelastomerschicht und dem Träger ein Luftpolster, so daß die Hülse bestehend aus dem Träger und der weichen elastomeren Schicht leicht seitlich verschoben werden kann. Gewünschtenfalls können selbstverständlich auch weitere Austrittsöffnungen für Druckluft vorhanden sein, so daß sich ein möglichst gleichmäßiges Luftpolster ausbilden kann.

## Patentansprüche

1. Walze bestehend aus einem Metallkern (1) und einer weichen, elastomeren Beschichtung (2) sowie zwei festen Zapfen (3,3'), dadurch gekennzeichnet, daß die Walze zwischen dem Metallkern und der elastomeren Beschichtung (2) aufweist eine feste, konische, dauerhaft mit dem Metallkern verbundene Hartelastomerschicht (4) und einen festen, konischen, geringfügig dehnbaren Träger (5), der dauerhaft mit der weichen elastomeren Schicht (2) verbunden ist und zwischen der Hartelastomerschicht (4) und dem Träger (5) durch durchströmende Druckluft ein Zwischenraum herstellbar ist, welcher ein seitliches Verschieben des Trägers auf der Hartelastomerschicht gestattet.

2. Walze gemäß Anspruch 1, dadurch gekennzeichnet, daß der Metallkern (1) hohl ist, an einer Seite eine Einlaßöffnung für Druckluft (6) aufweist und der Metallkern (1) auf seinem Außenumfang nebst der mit ihm fest verbundenen Hartelastomerschicht (4) mindestens eine Austrittsöffnung (7) für Druckluft aufweist.

3. Walze gemäß Anspruch 1 oder 2, dadurch gekennzeichnet, daß sich die Einlaßöffnung für Druckluft im Inneren einer der beiden Zapfen befindet.

4. Verfahren zum Aufbringen einer weichen elastomeren Schicht (2) auf eine Walze, bestehend aus einem Metallkern (1), zwei festen Zapfen (3,3') und einer weichen elastomeren Beschichtung (2), dadurch gekennzeichnet, daß von einer Seite her in den Metallkern (1) Druckluft eingeblasen wird, welche durch mindestens eine Austrittsöffnung (7) auf dem Außenumfang des Metallkerns (1) wieder austritt, wobei der Metallkern (1) auf dem Außenumfang eine konische Hartelastomerschicht (4) aufweist, die an den gleichen Stellen wie der Metallkern (1) ebenfalls mindestens eine Austrittsöffnung (7) für die Druckluft aufweist und wobei während des Durchblasens der Luft durch den Metallkern (1) und die Austrittsöffnungen (7) von der entgegengesetzten Seite her eine auf den Metallkern (1) passende Hülse aufgeschoben wird, welche aus einem festen, konischen, geringfügig dehnbaren Träger (5) und der weichen, elastomeren Schicht (2) besteht, wobei die Hülse nach Beendigung des Durchblasens der Luft sich zusammenzieht und fest auf der konischen Hartelastomerschicht (4) zu liegen kommt.
